# EUROPÄISCHE PATENTSCHRIFT

(11) **EP 0 991 891 B1**
(45) Veröffentlichungstag und Bekanntmachung des Hinweises auf die Patenterteilung: **27.08.2003**
(21) Anmeldenummer: 98936133.2
(22) Anmeldetag: 09.06.1998
(51) Int. Cl.: F16L 53/00, F16L 23/02, F01D 25/24

(54) **VORRICHTUNG ZUM VERBINDEN VON LEITUNGSABSCHNITTEN**
DEVICE FOR CONNECTING PIPE SECTIONS
DISPOSITIF POUR RACCORDER DES SECTIONS DE CONDUITES

(30) Priorität: 25.06.1997 DE 19727072
(43) Veröffentlichungstag der Anmeldung: 12.04.2000
(73) Patentinhaber: SIEMENS AKTIENGESELLSCHAFT, 80333 München (DE)
(72) Erfinder: KERN, Holger, D-47495 Rheinberg (DE); WECHSUNG, Michael, D-45476 Mülheim an der Ruhr (DE); ULMA, Andreas, D-45481 Mülheim an der Ruhr (DE); DALLINGER, Heinz, D-45475 Mülheim an der Ruhr (DE); MONNING, Karl-Heinz, D-45357 Essen (DE); BECKER, Ralph, D-47807 Krefeld (DE); WOLFERT, Paul, D-40699 Erkrath (DE); POLLAK, Helmut, D-45473 Mülheim an der Ruhr (DE)
(86) Internationale Anmeldenummer: DE9801586
(87) Internationale Veröffentlichungsnummer: WO99000620

(56) Entgegenhaltungen:
- DE-B- 1 000 649
- EPIFANOV ET AL.: "Flange seal with rubber washers for an ultrahigh vacuum" INSTRUMENTS AND EXPERIMENTAL TECHNIQUES, Bd. 18, Nr. 3, 5. Juni 1975, Seite 898 XP002078044

## Beschreibung

Die Erfindung bezieht sich auf eine Vorrichtung zum Verbinden von Leitungsabschnitten einer von einem heißen und hoch komprimierten Medium durchströmten Leitung, insbesondere einer dampfdurchströmten Rohrleitung.

Eine Dampfzuleitung für eine Dampfturbine ist üblicherweise für eine Dampftemperatur von mehr als 500°C und für einen Dampfdruck von mehr als 300bar ausgelegt. In einer derartigen Dampfzuleitung ist die Verbindungsstelle zwischen einer Dampf zuführenden Rohrleitung und einem Dampfeinlaßventil üblicherweise geschweißt ausgeführt. Zum Lösen dieser Verbindung, z.B. zu Montage- oder Revisionszwecken an der Dampfturbine, muß die Leitung mechanisch getrennt werden. Dies bedeutet bei einer Dampfturbine mit oberhalb einer Gehäuseteilfuge angeordnetem Dampfeinlaß einen erheblichen zusätzlichen Aufwand bei der Revision der Dampfturbine. Bei der Montage ergibt sich zusätzlich zu dem zeitlichen Aufwand für das Schweißen und das Glühen der Verbindungsstelle das Problem einer durch den Trennschnitt verkürzten Leitung, so daß bei erneuter Herstellung der Verbindung unerwünschte mechanische Spannungen in die Leitung eingebracht werden können.

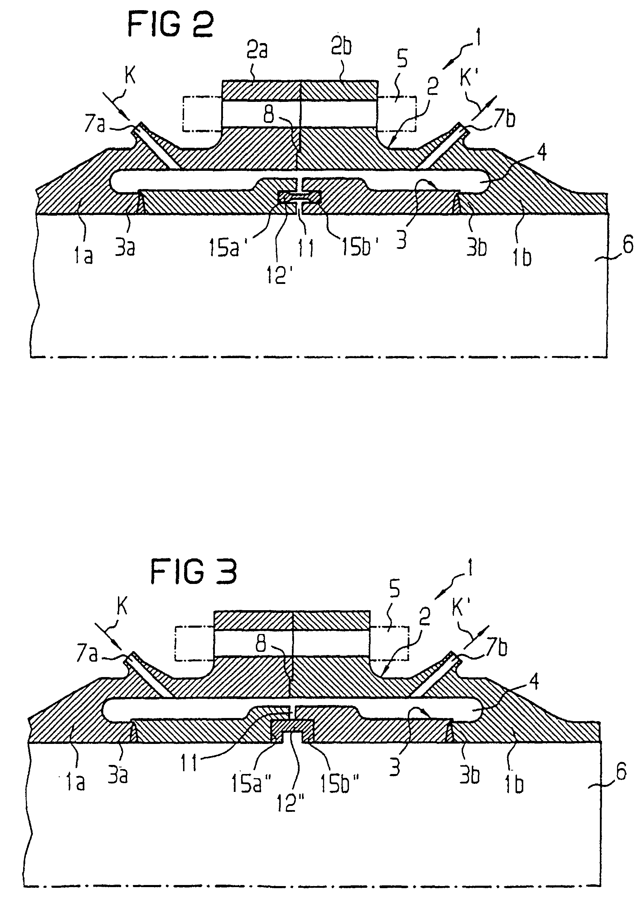

Im Dokument D1 (DE-B-1 000 649) ist eine Verbindungsstelle für von einem heißen Medium durchflossene rohrförmige Teile offenbart, die aus Werkstoffen mit unterschiedlichem Ausdehnungsverhalten bestehen. In Figur 2 wird eine Flanschverbindung offenbart, die einen von Kühlmittel gespeisten Ringkanal aufweist, wodurch die unterschiedliche Verformung der Rohrteile bedingt durch die unterschiedlichen Werkstoffe aufgrund thermischer Belastung reduziert wird. Des Weiteren wird ein den Durchmesser der Rohrleitung reduzierender Einsatz offenbart, der die Verbindungsstelle zusätzlich isoliert und einen direkten Kontakt mit dem heißen Medium verhindert.

Im Dokument D2 (Epifanov et al) wird eine Flanschdichtung mit Gummieinsätzen für ein Ultrahochvakuumsystem offenbart. Die Einsetztemperatur in diesem System liegt bei 450 °C. Die Flanschdichtung weist einen vom Leitungswasser durchflossenen Kanal zur Kühlung der Gummidichtung auf, die sonst bei diesen Betriebstemperaturen nicht einsetzbar wären.

Die Verwendung einer herkömmlichen Flanschverbindung an dieser Stelle führt aufgrund eines betriebsbedingt sehr hohen Wärmeeintrags durch das heiße Medium in den Flansch zu einer unzulässigen Wärmebeanspruchung innerhalb des Flansches und insbesondere im Bereich der Flanschschrauben. Da die Flanschschrauben thermisch extrem belastet werden, können diese in hohem Maße relaxieren. Die Relaxation der Flanschschrauben führt wiederum zu einem unerwünschten Kraftverlust auf die Teilfuge, so daß diese gegenüber dem hohen Druck des die Leitung durchströmenden Mediums häufig nicht mehr geschlossen gehalten werden kann.

Der Erfindung liegt daher die Aufgabe zugrunde, eine besonders geeignete Vorrichtung zum Verbinden von Leitungsabschnitten einer von einem heißen und hoch komprimierten Medium durchströmten Leitung, insbesondere einer dampfdurchströmten Rohrleitung, anzugeben, mit der die vorgenannten Nachteile vermieden sind.

Diese Aufgabe wird erfindungsgemäß gelöst durch die Merkmale des Anspruchs 1. Dabei ist eine doppelwandige Flanschverbindung mit einem Außenflansch und mit einem Innenflansch vorgesehen, zwischen denen ein Zwischenraum gebildet ist. Zur Kühlung des Außenflansches wird der Zwischenraum von einem Kühlmedium durchströmt. Die Flanschinnenwand oder der Innenflansch ist hierbei zweckmäßigerweise mittels einer Ringverbindung wärmebeweglich ausgebildet.

Durch die Beaufschlagung des Zwischenraumes mit einem Kühlmedium, z. B. mittels Luft, Wasser oder Dampf, ist praktisch ein isolierendes Polster innerhalb der Flanschverbindung hergestellt. Ein für das Kühlmedium bereitgestelltes Leitungssystem kann dann auch für eine häufig bei einer derartigen Dampfzuleitung vorgesehene Zwischenabsaugung verwendet werden. Ebenso kann bei einer bestehenden Dampfturbinenanlage die Zwischenabsaugung zur Flanschkühlung genutzt werden.

Die stirnseitig miteinander zu verbindenden Flanschteile sind durch eine U-förmige Kragenkontur des jeweiligen Leitungsabschnitts gebildet. Für eine form- und kraftschlüssige Verbindung wird lediglich die Flanschaußenwand oder der Außenflansch der Flanschverbindung mittels einer Anzahl von am Flanschumfang verteilt angeordneten Flanschschrauben verschraubt. Dabei sind die beiden sich gegenüberstehenden Außenflanschabschnitte vorteilhafterweise stirnseitig mit korrespondierenden Schulter- oder Stufenkonturen versehen, so daß die beiden Flanschteile stets miteinander fluchten. Dies erleichtert das Zusammenfügen der Flanschteile erheblich.

Die wärmebewegliche Verbindung der beiden Innenflanschabschnitte kann beispielsweise in einfacher Form als Nut- und Federverbindung ausgestaltet sein. Dabei ist eine I-Ringverbindung mit in entsprechende Axialnuten der Innenflanschabschnitte eingesetztem I-förmigen Ausgleichs- oder Dichtungsring oder eine kolbenringartige Verbindung des Innenflansches mit einem Übergreifen (Hintergriff) der Innenflanschabschnitte besonders zweckmäßig.

Vorzugsweise ist jedoch eine Winkelringverbindung vorgesehen, die Relativbewegungen der Innenflanschabschnitte zueinander in unterschiedlichen Bewegungsrichtungen ermöglicht. Dazu ist zweckmäßigerweise ein im Querschnitt L-förmiger Dicht- und Ausgleichsring vorgesehen, der Dehnungen aufnehmen kann und gleichzeitig dichtend wirkt. Dieser Ausgleichsring ermöglicht Relativbewegungen der beiden sich gegenüberstehenden Innenflanschabschnitte sowohl in Längsrichtung der Leitung als auch quer zur Leitungslängsachse.

Der Ausgleichsring wird zweckmäßigerweise mittels eines Gewinderinges an einem der Innenflanschabschnitte gehalten. Dazu ist in eingeschraubtem Zustand des Gewinderings zwischen dem entsprechenden Innenflanschabschnitt und einer Schulterkontur des Gewinderinges eine radiale Ringnut zur Aufnahme eines Schenkels des Ausgleichsrings ausgebildet. Eine axiale Ringnut des gegenüberliegenden Innenflanschabschnitt dient zur Aufnahme des anderen Schenkels des Ausgleichsrings. Aufgrund dieser zueinander senkrechten Dehnungsfugen oder Dehnungsnuten sind entsprechende Relativbewegungen in zwei zueinander senkrechten Richtungen möglich. Dabei wird der Ausgleichsring für eine Gleitbewegung mit geringem Spiel in den Nuten gehalten. Diese Verbindungs- oder Dichtungsart mittels einer L-Ringverbindung ist besonders vorteilhaft bei hohen Differenzdehnungen und bei großen Relativbewegungen zwischen den Innenflanschabschnitten in radialer Richtung.
Alternativ kann auch eine U-Ringverbindung mit einem in entsprechende schulterartige Ausnehmungen der Innenflanschabschnitte eingesetzten U-förmigen Ausgleichs- oder Dichtungsring vorgesehen sein. Der Einsatz einer U-Ringverbindung eignet sich besonders bei kurzen Innenflanschabschnitten und bei einer Verzunderungsgefährdung.

Die mit der Erfindung erzielten Vorteile bestehen insbesondere darin, daß durch eine doppelwandige Flanschverbindung mit Ausbildung eines Kühlungssystems zwischen einem Außenflansch und einem Innenflansch in Form eines von einem Kühlmedium durchströmten Zwischenraums eine derartige Leitung in einfacher Weise mehrfach getrennt und wieder verbunden werden kann. Somit kann die Leitung für höchste Dampfzustände (300bar/600°C) ausgelegt werden. Aufgrund der Durchflutung des Zwischenraumes mittels eines Kühlmediums, das vorzugsweise über in der Flanschaußenwand vorgesehene Durchführungen zu- und abgeführt wird, kann die Wärme von der Flanschverbindung in einfacher und zuverlässiger Weise abgeführt werden. Dadurch ist eine unzulässig hohe thermische und/oder mechanische Belastung der Flanschschrauben sicher vermieden.

Nachfolgend werden Ausführungsbeispiele der Erfindung anhand einer Zeichnung näher erläutert. Darin zeigen:
- FIG 1: im Längsschnitt eine doppelwandige Flanschverbindung mit einer L-Ringverbindung,
- FIG 2 bis 4: alternative Flanschverbindungen mit einer I-Ringverbindung, einer U-Ringverbindung bzw. einer Kolbenringverbindung, und
- FIG 5 und 6: die Flanschverbindung in einer Dampfzuleitung einer Dampfturbine mit radialer bzw. spiralförmiger Einströmung.

Einander entsprechende Teile sind in allen Figuren mit den gleichen Bezugszeichen versehen.

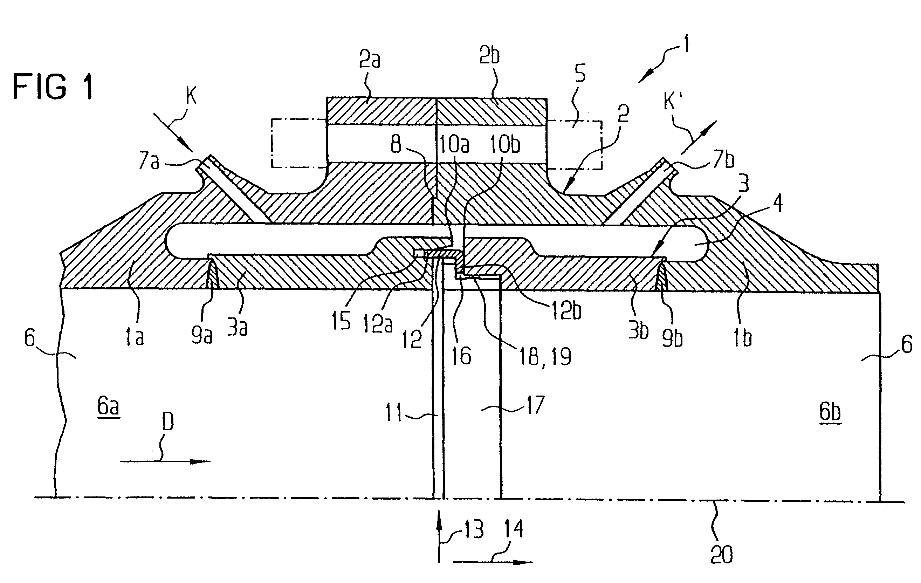

FIG 1 zeigt eine doppelwandige Flanschverbindung 1 mit einem Außenflansch 2 und mit einem Innenflansch 3, zwischen denen ein Zwischenraum oder eine Kühlkammer 4 gebildet ist. Der Außenflansch 2 ist mittels Flanschschrauben verschraubt, von denen nur eine Flanschschraube 5 sichtbar dargestellt ist. Der an einen ersten Leitungsabschnitt 6a einer Rohrleitung 6 angeformte Flanschteil 1a und der an einen zweiten Leitungsabschnitt 6b angeformte zweite Flanschteil 1b weisen ein U-förmiges Kragenprofil mit einem Außenflanschabschnitt 2a, 2b und mit einem Innenflanschabschnitt 3a bzw. 3b auf. Um bei der Herstellung der Flanschverbindung 1 eine fluchtende Ausrichtung der beiden Flanschteile 1a und 1b zu erreichen, weisen die beiden Außenflanschabschnitte 2a und 2b stirnseitig eine mit der jeweils anderen korrespondierende Schulterkontur 8 auf.

In jedem Außenflanschabschnitt 2a, 2b des Außenflansches 2 ist eine Durchgangsbohrung mit einer mit dem Zwischenraum 4 in Verbindung stehenden Durchführung 6a bzw. 6b vorgesehen. Zur Kühlung des Außenflansches 2 wird über die als Kühlmitteleinlaß dienende Durchführung 6a ein Kühlmedium K, vorzugsweise Dampf, in den Zwischenraum 4 geführt. Das dort durch indirekten Wärmetausch am Innenflansch 3 mit über die Rohrleitung 6 geführtem heißem Dampf D aufgewärmte Kühlmittel K' verläßt den Zwischenraum 4 über die als Kühlmittelauslaß dienende Durchführung 6b. Durch das somit geschaffene Polster wird eine Relaxion der Flanschschrauben 5 auf einfache Weise sicher vermieden.

Aus fertigungstechnischen Gründen sind die Innenflanschabschnitte 3a und 3b des Innenflansches 3 zweckmäßigerweise an Schweißstellen 9a und 9b an die Leitungsabschnitte 7a bzw. 7b angesetzt. Sie können jedoch dort auch einstückig angeformt sein. Die von der jeweiligen Schweißstelle 9a, 9b abgewandten stirnseitigen Freienden 10a und 10b der Innenflanschabschnitte 3a bzw. 3b stehen sich unter Bildung eines Ringspaltes 11 gegenüber.

Der durch die stirnseitigen Freienden 10a, 10b der Innenflanschabschnitte 3a bzw. 3b gebildete Verbindungsbereich des Innenflansches 3 ist durch Einsatz einer Ringverbindung wärmebeweglich ausgebildet. Dazu ist im Ausführungsbeispiel gemäß FIG 1 in der Art einer Winkelringverbindung ein im Querschnitt L-förmiger Ausgleichsring 12 vorgesehen, der den Ringspalt 11 zwischen den sich stirnseitig gegenüberstehenden Innenflanschabschnitten 3a und 3b dampfdicht verschließt. Der L-förmige Ausgleichsring oder Dichtungsring 12 ermöglicht durch seine spezielle Anordnung eine Relativbewegung der sich gegenüberstehenden Innenflanschabschnitte 3a,3b sowohl in radialer Bewegungsrichtung 13 als auch in axialer Bewegungsrichtung 14. Dabei ist ein Schenkel 12a des Ausgleichsrings 12 in einer Axialnut 15 des Innenflanschabschnitts 3a axialbeweglich gehalten, während der andere Schenkel 12b des Ausgleichsrings 12 in einer Radialnut 16 des Innenflanschabschnitts 3b radialbeweglich gehalten ist.

Der Ausgleichsring 12 wird mittels eines Gewinderings 17 am Innenflanschabschnitt 3b gehalten. Dazu ist der eine L-förmige Kragenkontur aufweisende Gewindering 17 mit einem Außengewinde 18 versehen, daß mit einem korrespondierenden Gewindeabschnitt 19 an der Innenseite des Innenflanschabschnitts 3b in Eingriff ist. Durch Verdrehen dieses Gewinderinges 17 entlang des Gewindes 18, 19 ist das Spiel an der Radialnut 16 einstellbar.

Der Ausgleichsring 12 gewährleistet somit eine wärmebewegliche Verbindung der sich gegenüberstehenden Innenflanschabschnitte 3a, 3b mit einer Bewegungsfreiheit sowohl entlang der Rohrlängsachse 20 als auch quer zur Rohrlängsachse 20. Der Ausgleichsring 12 wird dazu mit geringem Spiel in den zueinander senkrecht angeordneten Nuten 15 und 16 derart gehalten, daß eine Gleitbewegung sowohl in radialer Bewegungsrichtung 13 als auch in axialer Bewegungsrichtung 14 ermöglicht ist.

Eine entsprechende wärmebewegliche Verbindung der Innenflanschabschnitte 3a, 3b wird auch durch die alternativen Ringverbindungen gemäß FIG 2 bis 4 erzielt. Dazu zeigt FIG 2 eine I-Ringverbindung mit einem in stirnseitige Axialnuten 15a, 15b der Innenflansche 3a bzw. 3b eingelegten I-förmigen Dichtungs- oder Ausgleichsring 12'. Diese Variante ist fertigungstechnisch besonders einfach.

FIG 3 zeigt eine weitere, fertigungstechnisch besonders einfach herstellbare Variante der wärmebeweglichen Verbindung der Innenflanschabschnitte 3a, 3b mit einer U-Ringverbindung. Dabei ist ein U-förmiger Dichtungs- und Ausgleichsring 12'' in stirnseitig in die Innenflanschabschnitte 3a, 3b eingeformte Ausnehmungen 15a'' bzw. 15b'' eingesetzt. Diese Variante ist bei im Vergleich zur Variante nach FIG 1 kurzen Innenflanschabschnitten 3a, 3b besonders zweckmäßig.

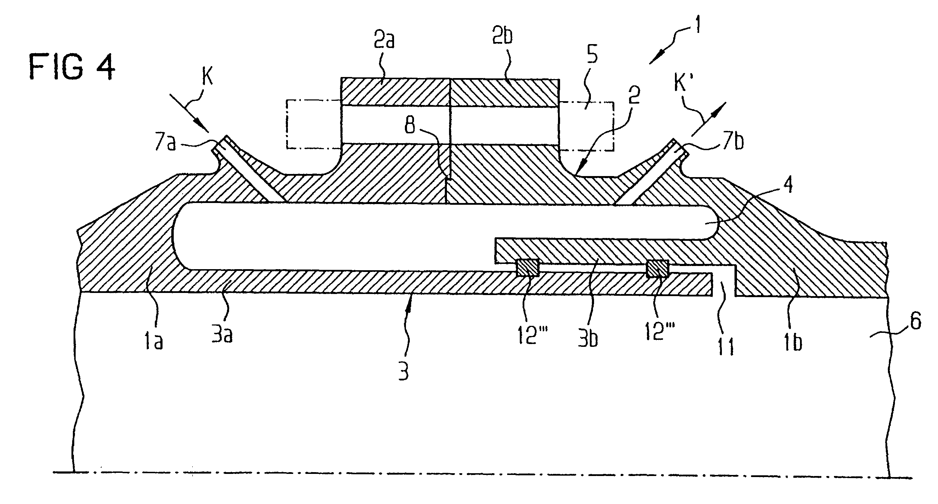

Eine gegenüber den Ausführungen nach FIG 1 bis 3 bezüglich der Anordnung der Innenflanschabschnitte 3a, 3b modifizierte Variante zeigt FIG 4. Dort ist der im Ausführungsbeispiel linke Innenflanschabschnitt 3a für einen Hintergriff des Innenflanschabschnitts 3b vergleichsweise lang ausgebildet. Der Innenflanschabschnitt 3a übergreift dabei unter Spaltbildung den rechten Innenflanschabschnitt 3b, so daß in Verbindung mit im Ausführungsbeispiel zwei Dichtungsringen 12''' eine Anordnung in der Art einer Kolbenringverbindung gebildet ist. Diese im Gegensatz zu den Varianten gemäß FIG 1 bis 3 asymmetrische Ausgestaltung der Flanschverbindung 1 ist fertigungstechnisch ebenfalls besonders einfach herstellbar.

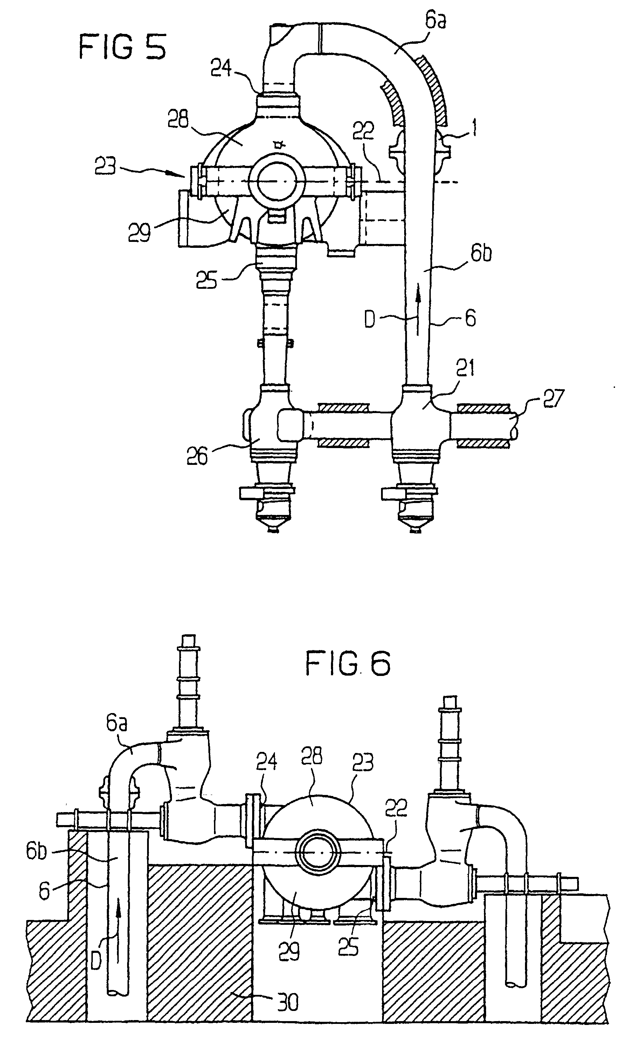

FIG 5 zeigt die Position einer derartigen Flanschverbindung 1 der Rohrleitung 6 zwischen einem ersten Dampfeinlaßventil 21 und einem oberhalb einer Teilfuge 22 einer Dampfturbine 23 vorgesehenen radialen Einströmabschnitt 24. Ein zweiter, unterhalb der Teilfuge 22 vorgesehener radialer Einströmabschnitt 25 ist mit einem weiteren Dampfeinlaßventil 26 verbunden. Die beiden Dampfeinlaßventile 21 und 26 liegen in einer gemeinsamen Dampfleitung 27.

Die Position oder Anordnung der Flanschverbindung 1 oberhalb der Teilfuge 21 der Dampfturbine 23 ermöglicht in einfacher Weise ein Anheben des Gehäuseoberteils 28 der Dampfturbine 23 zusammen mit dem oberhalb der Teilfuge 22 liegenden Leitungsabschnitt 6a der Rohrleitung 6 zu Montage- und/oder Revisionszwecken. Bei einer derartigen Montage bleibt das Gehäuseunterteil 29 der Dampfturbine 23 zusammen mit dem unterhalb der Teilfuge 22 liegenden Leitungsabschnitt 6b der Rohrleitung 6 ortsfest stehen. Dazu ist lediglich die Flanschverbindung 1 zu lösen und zu trennen, die im Anschluß an die Montagearbeiten an der Dampf- oder Dampfteilturbine 23 in einfacher Weise erneut hergestellt werden kann.

FIG 6 zeigt die Position der Flanschverbindung 1 bei einer Dampfturbine 23 mit Spiraleinströmung. Auch in diesem Fall ist der am Gehäuseoberteil 28 seitlich angeordnete Einströmabschnitt 24 zusammen mit dem oberhalb der Teilfuge 22 liegenden Leitungsabschnitt 6a der Rohrleitung 6 nach Lösen und Trennen der Flanschverbindung 1 abnehmbar. Beim Abheben des Gehäuseoberteils 28 zusammen mit dem Dampfeinlaßventil 21 bleibt das Gehäuseunterteil 29 der Dampfturbine 23 zusammen mit dem unteren, ebenfalls seitlich angeordneten Einströmabschnitt 25 und mit dem Dampfeinlaßventil 26 wiederum ortsfest auf einem die Dampfturbine 23 tragenden Fundament 30 stehen.

Die doppelwandige Flanschverbindung 1 gewährleistet die Trennung des die Rohrleitung 6 durchströmenden heißen und komprimierten Dampfes D von dem die feste, jedoch lösbare Verbindung herstellenden Außenflansch 2, während der wärmebeweglich ausgebildete Innenflansch 3 vom Dampf D direkt angeströmt wird. Der Wärmeeintrag in den Außenflansch 2 und in die Flanschschrauben 5 wird dabei durch die Beaufschlagung des Zwischenraumes 4 mit dem Kühl- oder Sperrmedium K erheblich reduziert. Durch die räumliche Trennung des Außenflansches 2 vom Innenflansch 3 mit wärmebeweglicher Verbindung wird die Einleitung von Druckkräften in radialer Richtung in den Außenflansch 2 der Flanschverbindung 1 vermindert. Zudem wird die thermische Belastung des Außenflansches 2 und damit der Flanschschrauben 5 reduziert.

Die Klaffung der Teilfuge 22 aufgrund unterschiedlicher Temperaturdehnungen der Leitungsabschnitte 6a, 6b und der Flanschteile 1a, 1b sowie eine starke Relaxation der Flanschschrauben 5 infolge eines hohen Wärmeeintrags ist somit sicher vermieden. Darüber hinaus kann die entsprechende Verbindungsstelle, d.h. die Verbindung zwischen den Leitungsabschnitt 6a und 6b der Rohrleitung 6, in einfacher Weise und wiederholbar geöffnet und geschlossen werden. Dadurch wird eine Reduzierung des Revisionsaufwandes erzielt, da ein Schweißen und Glühen der Verbindungsstelle entfällt. Auch ist eine mehrfache Trennung und Verbindung der Leitungsabschnitte 6a und 6b der Rohrleitung 6 sicher und zuverlässig möglich.

## Patentansprüche

1. Vorrichtung zum Verbinden von Leitungsabschnitten (6a, 6b) einer von einem heißen und hoch komprimierten Medium (D) durchströmten Leitung (6), insbesondere einer dampfdurchströmten Rohrleitung, mit einer doppelwandigen Flanschverbindung (1) zur Bildung eines von einem Kühlmedium (K) durchströmbaren Zwischenraums (4) zwischen einem Außenflansch (2) und einem Innenflansch (3), wobei der Innenflansch (3) mehrere Innenflanschabschnitte (3a, 3b) aufweist und mittels einer Ringverbindung (12, 12', 12'', 12''') zwischen den Innenflanschabschnitten (3a, 3b) wärmebeweglich ausgeführt ist.

2. Vorrichtung nach Anspruch 1, wobei der Außenflansch (2) mindestens zwei in den Zwischenraum (4) mündende Durchführungen (7a, 7b) aufweist.

3. Vorrichtung nach Anspruch 1 oder 2, wobei ein mit einem Leitungsabschnitt (6a, 6b) verbundener Flanschteil (1a 1b) eine U-förmige Kragenkontur mit einem Außenflanschabschnitt (2a, 2b) und mit einem Innenflanschabschnitt (3a, 3b) aufweist.

4. Vorrichtung nach einem der Ansprüche 1 bis 3, wobei ein erster Innenflanschabschnitt (3a) eine Axialnut (15) zur Aufnahme eines ersten Schenkels (12a) und der zweite Innenflanschabschnitt (3b) eine Radialnut (16) zur Aufnahme des zweiten Schenkels (12b) eines L-förmigen Ausgleichrings (12) aufweist.

5. Vorrichtung nach einem der Ansprüche 1 bis 4, wobei der zweite Innenflanschabschnitt (3b) zur Bildung einer einstellbaren Radialnut (16) einen eine L-förmige Kragenkontur aufweisenden Gewindering (17) trägt.

6. Vorrichtung nach einem der Ansprüche 1 bis 4, wobei die Innenflanschabschnitte (3a, 3b) des Innenflansches (3) zur Aufnahme eines I-förmigen Ausgleichsrings (12') ausgebildet sind.

7. Vorrichtung nach einem der Ansprüche 1 bis 4, wobei die Innenflanschabschnitte (3a, 3b) des Innenflansches (3) zur Aufnahme eines U-förmigen Ausgleichsrings (12'') ausgebildet sind.

8. Vorrichtung nach einem der Ansprüche 1 bis 4, bei der ein erster Innenflanschabschnitt (3a) den zweiten Innenflanschabschnitt (3b) unter Spaltbildung hintergreift, wobei zwischen den Innenflanschabschnitten (3a, 3b) mindestens ein Dichtungsring (12''') angeordnet ist.

9. Vorrichtung nach einem der Ansprüche 1 bis 8, wobei der Außenflansch (2) mittels Flanschschrauben (5) verschraubbar ist.

10. Vorrichtung nach einem der Ansprüche 1 bis 9, wobei die Außenflanschabschnitte (2a, 2b) des Außenflansches (2) stirnseitig korrespondierende Stufenkonturen (8) aufweisen.

11. Dampfturbine mit einer Vorrichtung nach einem der Ansprüche 1 bis 10.

## Claims

1. Device for connecting line sections (6a, 6b) of a line (6) through which a hot and highly compressed medium (D) flows, in particular of a pipeline through which steam flows, having a double-walled flange connection (1) for forming an intermediate space (4), through which a cooling medium (K) can flow, between an outer flange (2) and an inner flange (3), the inner flange (3) having a plurality of inner flange sections (3a, 3b) and being designed so as to allow for thermal movement by means of a ring connection (12, 12', 12'', 12''') between the inner flange sections (3a, 3b).

2. Device according to Claim 1, the outer flange (2) having at least two leadthroughs (7a, 7b) opening into the intermediate space (4).

3. Device according to Claim 1 or 2, a flange part (1a, 1b connected to a line section (6a, 6b) having a U-shaped collar contour with an outer flange section (2a, 2b) and an inner flange section (3a, 3b).

4. Device according to one of Claims 1 to 3, a first inner flange section (3a) having an axial groove (15) for accommodating a first leg (12a) and the second inner flange section (3b) having a radial groove (16) for accommodating the second leg (12b) of an L-shaped compensating ring (12).

5. Device according to one of Claims 1 to 4, the second inner flange section (3b), for forming an adjustable radial groove (16), carrying a threaded ring (17) which has an L-shaped collar contour.

6. Device according to one of Claims 1 to 4, the inner flange sections (3a, 3b) of the inner flange (3) being designed for accommodating an I-shaped compensating ring (12').

7. Device according to one of Claims 1 to 4, the inner flange sections (3a, 3b) of the inner flange (3) being designed for accommodating a U-shaped compensating ring (12'').

8. Device according to one of Claims 1 to 4, in which a first inner flange section (3a) engages behind the second inner flange section (3b) while forming a gap, at least one sealing ring (12''') being arranged between the inner flange sections (3a, 3b).

9. Device according to one of Claims 1 to 8, it being possible for the outer flange (2) to be bolted by means of flange bolts (5).

10. Device according to one of Claims 1 to 9, the outer flange sections (2a, 2b) of the outer flange (2) having corresponding stepped contours (8) at the end faces.

11. Steam turbine having a device according to one of Claims 1 to 10.

## Revendications

1. Dispositif de raccordement de sections de conduite (6a, 6b) d'une conduite (6) dans laquelle passe un fluide (D) chaud et très comprimé, en particulier d'une conduite tubulaire dans laquelle passe de la vapeur, comportant un raccordement par bride (1) à double paroi pour former un espace intermédiaire (4), dans lequel peut passer un fluide de refroidissement (K), entre une bride extérieure (2) et une bride intérieure (3), la bride intérieure (3) comportant plusieurs sections de bride intérieure (3a, 3b) et étant réalisée de façon mobile sous l'effet de la chaleur au moyen d'un raccordement annulaire (12, 12', 12", 12"') entre les sections de bride intérieure (3a, 3b).

2. Dispositif selon la revendication 1, dans lequel la bride extérieure (2) comporte au moins deux traversées (7a, 7b) débouchant dans l'espace intermédiaire (4).

3. Dispositif selon la revendication 1 ou 2, dans lequel une partie de bride (1a, 1b) raccordée à une section de conduite (6a, 6b) comporte un contour de bordure en forme de U comprenant une section de bride extérieure (2a, 2b) et une section de bride intérieure (3a, 3b).

4. Dispositif selon l'une des revendications 1 à 3, dans lequel une première section de bride intérieure (3a) comporte une gorge axiale (15) destinée à recevoir une première branche (12a) et la deuxième section de bride intérieure (3b) comporte une gorge radiale (16) destinée à recevoir la deuxième branche (12b) d'une bague de compensation (12) en forme de L.

5. Dispositif selon l'une des revendications 1 à 4, dans lequel la deuxième section de bride intérieure (3b) supporte une bague filetée (17), présentant un contour de bordure en forme de L, en vue de former une gorge radiale réglable (16).

6. Dispositif selon l'une des revendications 1 à 4, dans lequel les sections de bride intérieure (3a, 3b) de la bride intérieure (3) sont conformées pour recevoir une bague de compensation (12') en forme de I.

7. Dispositif selon l'une des revendications 1 à 4, dans lequel les sections de bride intérieure (3a, 3b) de la bride intérieure (3) sont conformées pour recevoir une bague de compensation (12") en forme de U.

8. Dispositif selon l'une des revendications 1 à 4, dans lequel une première section de bride intérieure (3a) s'accroche à la deuxième section de bride intérieure (3b) en formant une fente, au moins une bague d'étanchéité (12"') étant disposée entre les sections de bride intérieures (3a, 3b).

9. Dispositif selon l'une des revendications 1 à 8, dans lequel la bride extérieure (2) peut être fixée par vissage au moyen de vis de bride (5).

10. Dispositif selon l'une des revendications 1 à 9, dans lequel les sections de bride extérieure (2a, 2b) de la bride extérieure (2) présentent du côté frontal des contours en gradins (8) correspondants.

11. Turbine à vapeur comportant un dispositif selon l'une des revendications 1 à 10.
